# EUROPEAN PATENT SPECIFICATION

(11) **EP 3 184 363 B1**
(45) Date of publication and mention of the grant of the patent: **01.08.2018**
(21) Application number: 16382573.0
(22) Date of filing: 29.11.2016
(51) Int. Cl.: B60Q 3/217, B60Q 3/64, B60Q 3/78

(54) **LIGHTING DEVICE FOR AN INTERIOR PANEL OF A VEHICLE**
BELEUCHTUNGSVORRICHTUNG FÜR EINE INNENVERKLEIDUNG EINES FAHRZEUGS
DISPOSITIF D'ÉCLAIRAGE DE TABLEAU DE BORD DE VÉHICULE

(30) Priority: 24.12.2015 ES 201531908
(43) Date of publication of application: 28.06.2017
(73) Proprietor: Seat, S.A., 08760 Martorell (ES)
(72) Inventor: García Sánchez, Daniel, 08760 Barcelona (ES); de Mendonça Maia, André, 08760 Barcelona (ES); Gutiérrez Fernández, Marta, 08760 Barcelona (ES)
(74) Representative: Isern Patentes y Marcas S.L.

(56) References cited:
- EP-A1- 2 711 619
- JP-A- 2013 131 454
- KR-A- 20150 107 332
- KR-Y1- 200 472 902
- US-A1- 2011 141 760
- US-A1- 2013 094 233

## Description

### PURPOSE OF THE INVENTION

The present patent application relates to a lighting device for an interior panel of a vehicle according to claim 1, incorporating notable innovations and advantages.

### BACKGROUND TO THE INVENTION

The concept of lighting generating a three-dimensional (3D) effect is known and applied to lighting devices for vehicle lights currently on the market. To date, such lighting has been applied primarily to rear lights. Furthermore, the patents relating to this effect appear, through the related drawings or the way the technologies used, to be oriented towards implementation of a 3D effect in said rear lights. For this reason, this patent application relates to said 3D effect applied to the passenger compartment of the vehicle, focusing the technology used on the needs of internal lighting, where the technical requirements differ significantly from the technical requirements related to external lighting.

A rear lighting device for motor vehicles, comprising multiple LED light sources is known from the prior art, and specifically document WO2013113728. Said device is formed by the following elements, from back to front in the direction of the light beam emitted by said LED, namely: a printed circuit board (PCB) comprising at least three LEDs and preferably at least five LEDs rendered functional by suitable printed circuits and an external power supply, a light guide, optical parts suitable for guiding and/or distributing the beams from one or more of said LEDs, a mirror optionally with transparent or perforated areas, at least one semi-transparent screen, as well as an optional casing for housing all of said elements in a preferably sealed structure. The invention is suitable for the rear lights of motor vehicles.

This lighting device is therefore focused on external lighting with different functions in the same housing, such as brake lighting and side lighting. Specifically, the light arrives indirectly through the light guide and the rest of the optical elements, the light emission direction being the same as the reflection direction. This requires more space and the use of light guides with elbows (which result in significant losses) to ensure the light reaches all points. Furthermore, the end of the light guide is what brings the lights to the reflection zone, thereby making it a single light entry point. If multiple light entry points are required, a plurality of light guides with ends pointing towards the reflection zone are required.

A lighting device comprising a light source and an optical unit, which is assigned to the light source is also known from the prior art, specifically document EP2390137. The optical unit comprises a reflecting unit with a front mirror and a semi-reflecting unit arranged in the main radiation direction, between which the light is reflected, creating a continuous reflection effect.

The idea is technically designed for external lighting, in particular rear lighting. The light is emitted directly through lenses or optics in order to provide a primary brake lighting function. Simultaneously, the same light source is used to provide a second 3D-effect function for the side lights. To do so, some light beams enter the reflection zone entirely directly, i.e. with no optics or intermediate treatment.

A lighting device for motor vehicles is known from the prior art, and specifically document WO2014177816. The device comprises a combination of means essentially composed of: (a) a reflection zone in which the 3D effect is generated that comprises a reflective surface and a semi-transparent surface, and (b) parallel opaque plates, each of which faces one of the LED light emitters, in which said plates form a channel that guides the light from the emitter to the reflection zone. A specific feature of the patent is that the light emitter is inclined in relation to the axis defined by the parallel opaque plates such that the light strikes the light guide channel non-perpendicularly, such as to facilitate dispersion of the incident light in the reflection zone.

In this device, the light reaches the reflection zone indirectly, having first passed through a channel used to homogenize the light and a terminal to increase brightness. A plurality of parallel opaque plates for emitting light into the reflection zone and a plurality of light emitters are also required in this case, each light emitter having a dedicated channel and a dedicated terminal.

A device that has a semi-transparent screen and a reflective screen that form a cavity, one of the surfaces of which is concave or convex, is also known from the prior art, and specifically document EP2336632. This device includes a light source that includes a supporting element arranged such that the rays of light enter the cavity in a main direction oriented towards a space to be illuminated. The screens are arranged in relation to an emission direction of the light source such that some of the beams of light emitted by the light source shine outside the cavity, without passing through a semi-reflective zone of the screen. Consequently, this case also entails the direct emission of light and the indirect emission of light through the reflection cavity.

It is also known from the state of the art, the document US2011/141760 a trim element that comprises a first wall enabling the passage of light with an outer surface intended to be visible from the passenger compartment of the motor vehicle; a second wall defining a space with the first wall and one surface of which is capable of reflecting light rays; and a luminous element positioned inside the space so as to backlight the first wall. The luminous element sends a beam of light rays (L) to the second wall. The surface diffusely reflects light rays. An inner surface of the first wall has light-reflecting properties such that the incident light rays on said inner surface are partially reflected to the second wall and partially emitted across the first wall.

Therefore, there remains a need for a lighting device that applies the concept of reflection and semi-reflection to create a 3D effect for the user, particularly in the interior trim of a door panel.

### DESCRIPTION OF THE INVENTION

The present invention relates to the application of the concept of lighting that generates a 3D effect in the interior of motor vehicles, specifically applied to interior panels, where the technical lighting requirements to be satisfied are not as demanding as on the outside of the vehicle. Accordingly and by way of example, the light beams emitted by the light emitter are not required to directly illuminate the outside of the lighting module in order to satisfy the required intensity and illumination levels. Furthermore, the number of components required to emit and guide the light beams may be significantly reduced. Conversely, other technical requirements come into play, such as the design of the 3D effect generated, the limited space available for the lighting module, the high quality perceived by the user when observing the lighting module, both when the lighting is on and when the lighting is off, etc.

The 3D effect requires a 100% reflective surface to be arranged to face a surface that is semi-transmissive to light (substantially 50%). This surface enables approximately 50% of the incident light beams to pass through, while reflecting the other 50%. Consequently, the surface that is semi-transmissive to light emits some of the incident light beams outwards and reflects other light beams inwards. The reflected beams strike the 100% reflective surface again and return to the semi-transmissive surface, and so on, thereby achieving the 3D image effect, with a single light silhouette being seen from the outside repeated an indeterminate number of times, with each repetition being of lesser intensity. This creates an illusion of depth.

More specifically, the lighting device for an interior panel of a vehicle comprises at least one light transmission means that runs, when in use with an interior panel of a vehicle, substantially along the length of said interior panel, at least one light source linked to the at least one light transmission means and oriented towards one end of the at least one light transmission means, such that the at least one light transmission means guides the light emitted by the at least one light source in a light emission direction, a partially transparent mask that at least partially covers the light transmission means such as to enable light to pass through at least one transparent zone of the partially transparent mask, a reflective surface connected to the partially transparent mask, a semi-transparent surface connected to the partially transparent mask, a reflection area formed between the reflective surface and the semi-transparent surface such as to receive the light passing through the at least one transparent zone of the partially transparent mask, a tinted trim adjacent to the semi-transparent surface that enables light to pass through the tinted trim to the outside of the interior panel in an emission direction, in which the tinted trim, the reflective surface, the semi-transparent surface and the light emission direction are substantially parallel to one another.

Consequently, the lighting device emits light towards the interior of the passenger compartment, providing a substantially elongate illuminated surface. As such, the light is emitted by the at least one light source and guided by the at least one light transmission means in a substantially constant and uniform manner along the entire length of same, which runs in substantially the same direction as the light emission direction from the light source. This is a first important difference in relation to outside lighting concepts, where the light emission direction is essentially perpendicular to the reflective surface and to the semi-transparent surface. The lighting modules obtained in the prior art are therefore necessarily significantly deep, since all of the components are positioned in-line with one another in the light emission direction. It is easy to understand that this depth is not available inside the passenger compartment, in particular in door panels or instrument panels, hence the need for a shallow lighting module that both provides an elongate illuminated surface while minimizing the components and cost of the module.

Furthermore, such a layout helps to minimize the number of light emitters, since the light intensity required inside is not as great as required outside. Another noteworthy advantage of such a layout is that the tinted trim, the reflective surface, the semi-transparent surface and the light emission direction are substantially parallel to one another, which helps to achieve a correct reflection with no distortions in the 3D image emitted towards the inside of the passenger compartment.

It should also be noted that the light guide functions implemented are the conventional functions used to transmit light and to maximize the uniformity of the light throughout the entire length of same. In the present invention, the light guide has no angular changes of direction or corners, thereby obviating light losses at these points. The reflective surface is a 100% reflective surface that reflects all of the incident light beams. The multiple reflections of the light beams occur in the reflection zone or area between the reflective surface and the semi-transparent surface in order to produce the 3D effect.

Furthermore, tinted trim is a component that is not used in the lighting devices known in the prior art implementing 3D illumination. This tinted surface has a finish that enables light to pass outwards through the reflection area, but conversely does not allow beams of light to enter from the outside. This feature is particularly advantageous as it avoids distortions of light in the reflection area, resulting in a sharp clear image, as well as concealing the components that make up the lighting device according to the present invention from the outside such as to enhance the finish inside the vehicle, which is an essential requirement of any components located in the passenger compartment of a vehicle.

According to another aspect of the invention, the emission direction is in a plane substantially perpendicular to the semi-transparent surface. As such, all of the light transmitted from the reflection area towards the semi-transparent surface passes through said semi-transparent surface to the outside of the device, i.e. towards the inside of the passenger compartment, minimizing the light loss.

The reflection area is also defined by the transparent zone of the partially transparent mask, the reflection area being adjacent to the at least one transparent zone of the partially transparent mask. The light guided through the light transmission means is transmitted through said transparent zone of the partially transparent mask to the reflection area, thereby enabling the lighting device to work. Said transparent zones are located along the light transmission means, determining light entry zones into the reflection area. As such, the transparent zones of the partially transparent mask can be adjusted to determine the image used to generate the 3D effect. Furthermore, the reflective surface and the semi-transparent surface are located on either side of the transparent zone of the partially transparent mask. As such, the transparent zone of the partially transparent mask is located between the reflective surface and the semi-transparent surface, concentrating all of the light in the reflection area.

In a preferred embodiment of the invention, the reflective surface, the semi-transparent surface and the tinted trim overlap one another in the light reflection direction. Consequently, the light is transmitted to the inside of the passenger compartment of the vehicle with hardly any unwanted distortion or loss. Advantageously, the surfaces may have a special shape that is different from a rectangular shape. The layout described above enables said components to have this special shape suited to the interior design of the vehicle, satisfying the requirement that all three components need to have the same shape and to be substantially parallel with one another.

In a preferred embodiment of the invention, the interior panel includes the tinted trim as an external element, the semi-transparent surface being positioned between the reflective surface and the tinted trim.

Advantageously, the partially transparent mask includes a matte-white inner face next to the light transmission means. This is intended to eliminate light losses. Consequently, the light transmission means or light guide is enclosed by matte white walls along the entire length of same, thereby increasing the uniformity of the light inside same and preventing the loss and absorption of light in said zone. This is intended to minimize light losses during light transmission in consideration of the need to minimize the number of light emitters.

Consequently, the mask prevents light from leaking by surrounding the light transmission means, and increases the uniformity of the light by means of the matte white finish of the internal walls of same.

Furthermore, the partially transparent mask includes a black outer face next to the light reflection area, intended to absorb any dispersed light beams that are not used to create the 3D effect.

In a preferred embodiment of the invention, the partially transparent mask is made of acrylonitrile butadiene styrene (ABS), making same impact-resistant and facilitating the correct transmission of light through same.

In a preferred embodiment of the invention, light is allowed to pass through the partially transparent mask by removing the black from the outer face using a lasering process, such as to define or obtain the at least one transparent zone enabling light to pass through to the reflection zone. More specifically, this involves applying a laser to the mask in order to obtain a transparent zone between the cavity in the light guide and the reflection zone or area. This ensures that the beams of light only pass through the trim in this zone. Consequently, the shape of the lasered image can be changed to determine the shape of the image to be reflected multiple times and seen by the user. Consequently, a technique that does not limit the images that can be obtained is used. Specifically, laser ring removes the layer of black paint forming the image through which the light passes. Furthermore, this method ensures that the light passing through is uniform in colour. Alternatively, die-cutting may be used, also enabling the direct passage of light, although this method results in surface defects and nonuniformities. Any defect or dispersion of light would pass through to the reflection zone, on account of which it is very important to provide a material to absorb such defects. White ABS is ideal for providing this uniformity. Furthermore, operation of same is not dependent on the colour of the LED. Consequently, any colour generated passes through with the same precision and quality.

The partially transparent mask in the lighting device according to the present invention thus performs three functions: helping to prevent losses of light by surrounding the light transmission means with substantially matte white walls, enabling light to be transmitted from the light transmission means to the reflection area only through the transparent zones of the partially transparent mask in order to achieve high definition in the desired image, and finally preventing unwanted light beams from being involved in the 3D effect by means of a black finish of the surface next to the reflection area, thereby preventing the desired image from being distorted and blurred.

Advantageously, a cavity formed at least partially by the partially transparent mask surrounds the light transmission means. This encloses the light transmission means, preventing losses and leaks of light and only enabling light to be transmitted through the transparent zone.

In a preferred embodiment of the invention, the tinted trim has a black smoke finish so that the user cannot see the elements that make up the inside of the trim. Furthermore, a good design and finish is achieved in accordance with the interior requirements of the passenger compartment of a vehicle.

Advantageously, the tinted trim is made of polycarbonate with black tinting such as to achieve high impact resistance, high transparency, high resistance to thermal deformation, high dimensional stability and good electrical isolation properties. Alternatively, said tinted trim may be made of high-hardness polymethyl methacrylate (PMMA) to prevent scratching, with a tinted translucent surface finish to make the outside appear dark and preferably shiny. Thus, when the at least one light source is turned off, the tinted trim behaves like an opaque element (i.e. is not see-through) and when the at least one light source is turned on, the tinted trim enables light to pass through and shows the decoration or image generated in the reflection area. Furthermore, it is also the element that covers and protects the internal components of the lighting device.

According to another aspect of the invention, the tinted trim includes a semi-reflective chrome-paint-based layer on the face oriented towards the reflective surface such that the reflection area is formed between the reflective surface and the tinted trim. Thus, in a preferred embodiment, the semi-transparent surface or layer is a chrome paint that enables the semi-reflection. This helps to reduce the number of components required, since the semi-transparent surface and the tinted trim are a single component, and the external material provides a good external surface finish while enabling light to travel inside-out but not outside-in

In a preferred embodiment of the invention, the lighting device has a light source facing each end of the light transmission means such as to improve luminous intensity and uniformity throughout the entire length of the device.

The semi-transparent surface reflects between 40% and 60% of the incident light beams, such that some first beams of light incident on the semi-transparent surface are reflected to the reflection area and some second beams of light incident on the semi-transparent surface are transmitted through the semi-transparent surface in the emission direction. The illusion of depth and the 3D effect are thus achieved by means of multiple reflections.

Consequently, the concept of reflection between a reflective surface and a semi-transparent surface is adapted to create multiple reflections and a 3D visual effect suited to the needs and requirements of interior lighting in a vehicle, in which the change of direction of the light beams to minimize the internal space occupied by the lighting device is particularly relevant, along with the specific selection of light beams reaching the reflection area through the transparent mask in order to create a specific image from which the 3D effect is generated.

The attached drawings show, by way of a nonlimiting example, a lighting device for an interior panel of a vehicle according to the invention. Other features and advantages of said lighting device for an interior panel of a vehicle, to which the present invention relates, are set out in the description of a preferred, but non-exclusive, embodiment, which is illustrated by way of a nonlimiting example in the attached drawings, in which:

### SHORT DESCRIPTION OF THE FIGURES

Figure 1 is a perspective view of the lighting device coupled to an interior panel of a vehicle according to the present invention.
Figure 2 is a detailed perspective view of the lighting device for an interior panel of a vehicle according to the present invention.
Figure 3 is a cross section of the lighting device for an interior panel of a vehicle according to the present invention.

### DESCRIPTION OF A PREFERRED EMBODIMENT

In consideration of the numbering adopted, the aforementioned figures show an example preferred embodiment of the invention that includes the parts and elements mentioned and described in detail below.

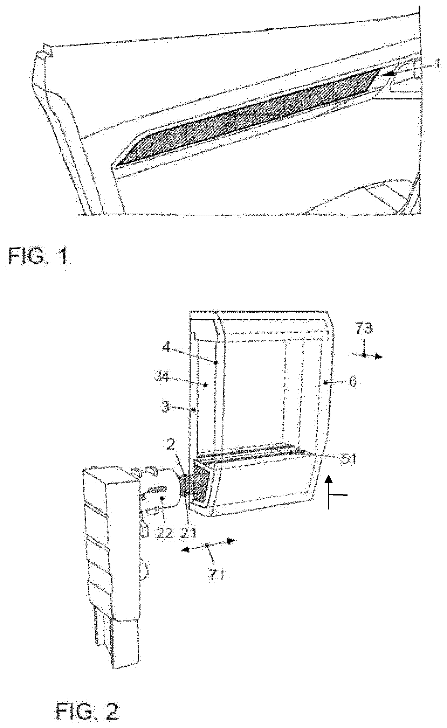

The present invention is intended to provide a novel lighting device for vehicle interiors. As such and as shown in Figure 1, the lighting device according to the present invention can be used to generate a decorative illuminated surface of a panel of a door of a vehicle. The present lighting device generates an illuminated image with a 3D or depth effect.

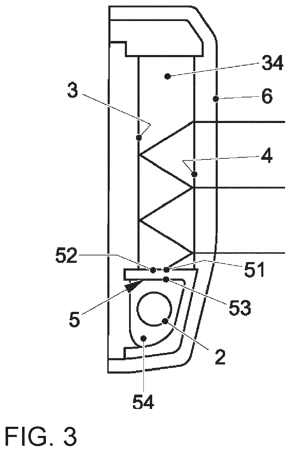

As shown in Figures 2 and 3, the lighting device for an interior panel of a vehicle comprises at least one light transmission means 2 that runs substantially along the length of the interior panel 1 of the vehicle, at least one light source 22 linked to the at least one light transmission means 2 and oriented towards one end 21 of the at least one light transmission means 2, such that the at least one light transmission means 2 guides the light emitted by the at least one light source 22 in a light emission direction 71, a partially transparent mask 5 that at least partially covers the light transmission means 2 such as to enable light to pass through at least one transparent zone 51 of the partially transparent mask 5, a reflective surface 3 connected to the partially transparent mask 5, a semi-transparent surface 4 connected to the partially transparent mask 5, a reflection area 34 formed between the reflective surface 3 and the semi-transparent surface 4 such as to receive the light passing through the at least one transparent zone 51 of the partially transparent mask 5, a tinted trim 6 adjacent to the semi-transparent surface 4 that enables light to pass through the tinted trim 6 to the outside of the interior panel 1 in a second emission direction 73, in which the tinted trim 6, the reflective surface 3, the semi-transparent surface 4 and the light emission direction 71 are substantially parallel to one another.

Normally, in a preferred embodiment, the trim or interior panels 1 in which this 3D effect is generated are elongate and narrow. Furthermore, in order to reduce the number of light emitters or light sources 22 required and to guarantee high uniformity of the light throughout the trim, a light guide or light transmission means 2 running along the entire length of the trim or interior panel 1 is used. To achieve this, in an advantageous embodiment, a light source 22 is used at each end of the light guide or light transmission means 2, aiming and emitting light directly onto each end of the light guide or light transmission means 2. Two LEDs arranged to face one another at either end of the light guide or light transmission means 2 are normally used. This provides a compact module that occupies a minimum of space and minimizes energy consumption, but that simultaneously generates precise uniform lighting that catches the user's attention.

More specifically, as shown in Figures 2 and 3, the second emission direction 73 is in a plane substantially perpendicular to the semi-transparent surface 4.

On the other hand, as shown in Figures 2 and 3, the reflection area 34 is also defined by the transparent zone 51 of the partially transparent mask 5, the reflection area 34 being adjacent to the at least one transparent zone 51 of the partially transparent mask 5.

Additionally, as shown in Figures 1, 2 and 3, the reflective surface 3, the semi-transparent surface 4 and the tinted trim 6 overlap one another in the second emission direction 73.

According to a specific embodiment of the invention, if the tinted trim 6 incorporates the semi-reflective or semi-transparent surface 4, said surface need only be parallel with the reflective surface 3.

According to another aspect of the invention, as shown in Figures 1, 2 and 3, the interior panel 1 includes the tinted trim 6 as an external element, the semi-transparent surface 4 being positioned between the reflective surface 3 and the tinted trim 6.

More specifically, as shown in Figures 2 and 3, the partially transparent mask 5 includes a matte-white inner face 53 next to the light transmission means 2.

According to a preferred embodiment of the invention, as shown in Figures 2 and 3, the partially transparent mask 5 includes a black outer face 52 next to the light reflection area 34. According to a specific embodiment of the invention, the black colour is a coat of black paint. As such, the partially transparent mask 5 has an outer coat of black paint (similar to the black colour used on the keys of a keyboard).

More specifically, as shown in Figure 3, the material of the partially transparent mask 5 is acrylonitrile butadiene styrene (ABS). In a specific embodiment, the material is white ABS.

According to another aspect of the invention, as shown in Figures 2 and 3, light is allowed to pass through the partially transparent mask 5 by removing the black from the outer face 52 using a lasering process, such as to define the at least one transparent zone 51 enabling light to pass through to the reflection zone 34.

Additionally, as shown in Figures 2 and 3, a cavity 54 formed at least partially by the partially transparent mask 5 surrounds the light transmission means 2.

More specifically and as shown in Figure 1, the tinted trim 6 has a black smoke finish.

Furthermore and as shown in Figure 1, the tinted trim 6 is made of polycarbonate with black tinting.

According to a preferred embodiment of the invention, as shown in Figures 2 and 3, the tinted trim 6 includes a semi-reflective chrome-paint-based layer on the face oriented towards the reflective surface 3 such that the reflection area 34 is formed between the reflective surface 3 and the tinted trim 6.

More specifically, the lighting device includes a light source 22 facing each end 21 of the light transmission means 2.

According to a specific embodiment of the invention, as shown in Figures 2 and 3, the semi-transparent surface 4 reflects between 40% and 60% of the incident light beams, such that some first beams of light incident on the semi-transparent surface 4 are reflected to the reflection area 34 and some second beams of light incident on the semi-transparent surface 4 are transmitted through the semi-transparent surface 4 in the second emission direction 73. The semi-reflective or semi-transparent surface 4 is parallel to the reflective surface 3, also referred to as an interior cover with mirror.

Observing operation of the present invention in greater detail, Figure 2 shows a first light source 22 facing the light transmission means 21. The end opposite the light transmission means 21 contains a second light source 22 to make the light transmitted through the light transmission means 21 along the light emission direction 71 more uniform and constant. The light transmission means 21 is preferably a light guide of circular section, that is substantially elongate and that minimizes changes of direction in order to prevent losses of light at the elbows.

Consequently, the light is transmitted along the light transmission means 21. In order to minimize light losses and leaks, the light transmission means 21 is covered by an inner face 53 of the partially transparent mask 5 such as to form a cavity 54. The white walls that form the inner face 53 prevent light beams from leaving the cavity 54, thereby improving the efficiency of light transmission, as well as the uniformity of same.

The light only leaves the cavity 54 through the at least one transparent zone 51 of the partially transparent mask 5. As such, the zones through which the light is intended to enter the reflection area 34 are selected in order to define the image to be generated. As shown in Figure 2, the transparent zone 51 is, by way of example, substantially an elongate rectangle formed in the lower zone of the reflection area 34. As such, the light is transmitted from the cavity 54 to the reflection area 34 substantially in a light transmission direction through the transparent zones 51. These transparent zones 51 may be of any shape, thereby changing the image to be displayed.

Furthermore and as shown in Figure 3, the light beams enter the reflection area 34 and originate the reflections in order to generate a 3D effect. This generates a succession of reflections between the reflective surface 3 and the semi-transparent surface 4. The semi-reflective nature of the semi-transparent surface 4 ensures that some of the light beams are reflected towards the reflective surface 3 and the remaining light beams are emitted towards the tinted trim 6 and the outside. This generates a succession of images that reproduce the transparent zone 51, each being progressively smaller and less intense, thereby generating a 3D or depth effect.

The cross section in Figure 3 shows the minimal space occupied by the lighting device according to the present invention, especially in the second emission direction 73 or depth of the device, this being particularly relevant for vehicle interiors.

### List of reference signs:

- 1: interior panel
- 2: light transmission means
- 21: end
- 22: light source
- 3: reflective surface
- 34: reflection area
- 4: semi-transparent surface
- 5: partially transparent mask
- 51: transparent zone
- 52: external face
- 53: internal face
- 54: cavity
- 6: tinted trim
- 71: emission direction
- 73: second emission direction

## Claims

1. Lighting device for an interior panel (1) of a vehicle comprising:
- at least one light transmission means (2),
- at least one light source (22) linked to the at least one light transmission means (2) and oriented towards one end (21) of the at least one light transmission means (2), such that the at least one light transmission means (2) guides the light emitted by the at least one light source (22) in a light emission direction (71),
**characterized in that** it further comprises :
- a partially transparent mask (5) that at least partially covers the light transmission means (2) such as to enable light to pass through at least one transparent zone (51) of the partially transparent mask (5),
- a reflective surface (3) connected to the partially transparent mask (5),
- a semi-transparent surface (4) connected to the partially transparent mask (5),
- a reflection area (34) formed between the reflective surface (3) and the semi-transparent surface (4) such as to receive the light passing through the at least one transparent zone (51) of the partially transparent mask (5),
- a tinted trim (6) adjacent to the semi-transparent surface (4) that enables light to pass through the tinted trim (6) to the outside of the interior panel (1) in a second emission direction (73),
in which the tinted trim (6), the reflective surface (3), the semi-transparent surface (4) and the light emission direction (71) are substantially parallel to one another.

2. Lighting device for an interior panel (1) of a vehicle according to Claim 1, **characterized in that** the second emission direction (73) is in a plane substantially perpendicular to the semi-transparent surface (4).

3. Lighting device for an interior panel (1) of a vehicle according to Claim 1, **characterized in that** the reflection area (34) is also defined by the transparent zone (51) of the partially transparent mask (5), the reflection area (34) being adjacent to the at least one transparent zone (51) of the partially transparent mask (5).

4. Lighting device for an interior panel (1) of a vehicle according to Claim 1, **characterized in that** the reflective surface (3), the semi-transparent surface (4) and the tinted trim (6) overlap one another in the second light emission direction (73).

5. Lighting device for an interior panel (1) of a vehicle according to Claim 1, **characterized in that** the interior panel (1) includes the tinted trim (6) as an external element, the semi-transparent surface (4) being positioned between the reflective surface (3) and the tinted trim (6).

6. Lighting device for an interior panel (1) of a vehicle according to Claim 1, **characterized in that** the partially transparent mask (5) includes a matte-white inner face (53) next to the light transmission means (2).

7. Lighting device for an interior panel (1) of a vehicle according to Claim 1, **characterized in that** the partially transparent mask (5) includes a black outer face (52) next to the light reflection area (34).

8. Lighting device for an interior panel (1) of a vehicle according to Claim 1, **characterized in that** the material of the partially transparent mask (5) is acrylonitrile butadiene styrene (ABS).

9. Lighting device for an interior panel (1) of a vehicle according to Claims 1 and 7, **characterized in that** light is allowed to pass through the partially transparent mask (5) by removing the black from the outer face (52), such as to define the at least one transparent zone (51) enabling light to pass through to the reflection zone (34).

10. Lighting device for an interior panel (1) of a vehicle according to Claim 1, **characterized in that** a cavity (54) formed at least partially by the partially transparent mask (5) surrounds the light transmission means (2).

11. Lighting device for an interior panel (1) of a vehicle according to Claim 5, **characterized in that** the tinted trim (6) has a black smoke finish, and/or is made of polycarbonate with black tinting.

12. Lighting device for an interior panel (1) of a vehicle according to Claim 1, **characterized in that** the tinted trim (6) includes a semi-reflective chrome-paint-based layer on the face oriented towards the reflective surface (3) such that the reflection area (34) is formed between the reflective surface (3) and the tinted trim (6).

13. Lighting device for an interior panel (1) of a vehicle according to Claim 1, **characterized in that** it includes a light source (22) facing each end (21) of the light transmission means (2).

14. Lighting device for an interior panel (1) of a vehicle according to Claim 1, **characterized in that** the semi-transparent surface (4) reflects between 40% and 60% of the incident light beams, such that some first beams of light incident on the semi-transparent surface (4) are reflected to the reflection area (34) and some second beams of light incident on the semi-transparent surface (4) are transmitted through the semi-transparent surface (4) in the second emission direction (73).

15. Interior panel (1) of a vehicle comprising a lighting device according to claim 1, **characterized in that** the at least one light transmission means (2) runs substantially along the length of the interior panel (1).

## Patentansprüche

1. Beleuchtungsvorrichtung für eine Innenverkleidung (1) eines Fahrzeugs, umfassend:
- mindestens ein Lichtübertragungsmittel (2),
- mindestens eine Lichtquelle (22), die mit dem mindestens einen Lichtübertragungsmittel (2) verknüpft ist und in Richtung eines Endes (21) des mindestens einen Lichtübertragungsmittels (2) orientiert ist, so dass das mindestens eine Lichtübertragungsmittel (2) das von der mindestens einen Lichtquelle (22) emittierte Licht in eine Lichtemissionsrichtung (71) führt,
**dadurch gekennzeichnet, dass** sie ferner umfasst:
- eine teilweise transparente Maske (5), die das Lichtübertragungsmittel (2) mindestens teilweise bedeckt, um so Licht zu ermöglichen, durch mindestens eine transparente Zone (51) der teilweise transparenten Maske (5) hindurch zu gelangen,
- eine reflektierende Oberfläche (3), die mit der teilweise transparenten Maske (5) verbunden ist,
- eine halbtransparente Oberfläche (4), die mit der teilweise transparenten Maske (5) verbunden ist,
- einen Reflexionsbereich (34), der zwischen der reflektierenden Oberfläche (3) und der halbtransparenten Oberfläche (4) gebildet ist, um so das Licht zu empfangen, das durch die mindestens eine transparente Zone (51) der teilweise transparenten Maske (5) hindurch gelangt,
- eine getönte Zierleiste (6) neben der halbtransparenten Oberfläche (4), die ermöglicht, dass Licht durch die getönte Zierleiste (6) hindurch in einer zweiten Emissionsrichtung (73) zu der Außenseite der Innenverkleidung (1) gelangt,
wobei die getönte Zierleiste (6), die reflektierende Oberfläche (3), die halbtransparente Oberfläche (4) und die Lichtemissionsrichtung (71) im Wesentlichen parallel zueinander sind.

2. Beleuchtungsvorrichtung für eine Innenverkleidung (1) eines Fahrzeugs nach Anspruch 1, **dadurch gekennzeichnet, dass** die zweite Emissionsrichtung (73) in einer Ebene im Wesentlichen senkrecht zu der halbtransparenten Oberfläche (4) ist.

3. Beleuchtungsvorrichtung für eine Innenverkleidung (1) eines Fahrzeugs nach Anspruch 1, **dadurch gekennzeichnet, dass** der Reflexionsbereich (34) auch durch die transparente Zone (51) der teilweise transparenten Maske (5) definiert ist, wobei der Reflexionsbereich (34) benachbart zu der mindestens einen transparenten Zone (51) der teilweise transparenten Maske (5) ist.

4. Beleuchtungsvorrichtung für eine Innenverkleidung (1) eines Fahrzeugs nach Anspruch 1, **dadurch gekennzeichnet, dass** die reflektierende Oberfläche (3), die halbtransparente Oberfläche (4) und die getönte Zierleiste (6) einander in der zweiten Lichtemissionsrichtung (73) überlappen.

5. Beleuchtungsvorrichtung für eine Innenverkleidung (1) eines Fahrzeugs nach Anspruch 1, **dadurch gekennzeichnet, dass** die Innenverkleidung (1) die getönte Zierleiste (6) als externes Element einschließt, wobei die halbtransparente Oberfläche (4) zwischen der reflektierenden Oberfläche (3) und der getönten Zierleiste (6) positioniert ist.

6. Beleuchtungsvorrichtung für eine Innenverkleidung (1) eines Fahrzeugs nach Anspruch 1, **dadurch gekennzeichnet, dass** die teilweise transparente Maske (5) eine mattweiße Innenfläche (53) neben dem Lichtübertragungsmittel (2) einschließt.

7. Beleuchtungsvorrichtung für eine Innenverkleidung (1) eines Fahrzeugs nach Anspruch 1, **dadurch gekennzeichnet, dass** die teilweise transparente Maske (5) eine schwarze Außenfläche (52) neben dem Lichtreflexionsbereich (34) einschließt.

8. Beleuchtungsvorrichtung für eine Innenverkleidung (1) eines Fahrzeugs nach Anspruch 1, **dadurch gekennzeichnet, dass** das Material der teilweise transparenten Maske (5) Acrylnitril-Butadien-Styrol (ABS) ist.

9. Beleuchtungsvorrichtung für eine Innenverkleidung (1) eines Fahrzeugs nach den Ansprüchen 1 und 7, **dadurch gekennzeichnet, dass** Licht durch die teilweise transparente Maske (5) hindurch gelangen gelassen wird, indem das Schwarz von der Außenfläche (52) entfernt wird, um so die mindestens eine transparente Zone (51) zu definieren, wodurch Licht durch die Reflexionszone (34) hindurch gelangen kann.

10. Beleuchtungsvorrichtung für eine Innenverkleidung (1) eines Fahrzeugs nach Anspruch 1, **dadurch gekennzeichnet, dass** ein Hohlraum (54) mindestens teilweise durch die teilweise transparente Maske (5) gebildet ist, die das Lichtübertragungsmittel (2) umgibt.

11. Beleuchtungsvorrichtung für eine Innenverkleidung (1) eines Fahrzeugs nach Anspruch 5, **dadurch gekennzeichnet, dass** die getönte Zierleiste (6) ein schwarzes Rauch-Finish aufweist und/oder aus Polycarbonat mit schwarzer Tönung gefertigt ist.

12. Beleuchtungsvorrichtung für eine Innenverkleidung (1) eines Fahrzeugs nach Anspruch 1, **dadurch gekennzeichnet, dass** die getönte Zierleiste (6) eine halbreflektierende Schicht auf Chromfarbbasis auf der Fläche einschließt, die zu der reflektierenden Oberfläche (3) hin orientiert ist, so dass der Reflexionsbereich (34) zwischen der reflektierenden Oberfläche (3) und der getönten Zierleiste (6) gebildet ist.

13. Beleuchtungsvorrichtung für eine Innenverkleidung (1) eines Fahrzeugs nach Anspruch 1, **dadurch gekennzeichnet, dass** sie eine Lichtquelle (22) einschließt, die zu jedem Ende (21) des Lichtübertragungsmittels (2) weist.

14. Beleuchtungsvorrichtung für eine Innenverkleidung (1) eines Fahrzeugs nach Anspruch 1, **dadurch gekennzeichnet, dass** die halbtransparente Oberfläche (4) zwischen 40 % und 60 % der einfallenden Lichtstrahlen reflektiert, so dass einige erste Lichtstrahlen, die auf die halbtransparente Oberfläche (4) einfallen, auf den Reflexionsbereich (34) reflektiert werden, und einige zweite Lichtstrahlen, die auf die halbtransparente Oberfläche (4) einfallen, durch die halbtransparente Oberfläche (4) in der zweiten Emissionsrichtung (73) übertragen werden.

15. Innenverkleidung (1) eines Fahrzeugs, umfassend eine Beleuchtungsvorrichtung nach Anspruch 1, **dadurch gekennzeichnet, dass** das mindestens eine Lichtübertragungsmittel (2) im Wesentlichen entlang der Länge der Innenverkleidung (1) verläuft.

## Revendications

1. Dispositif d'éclairage pour un panneau intérieur (1) d'un véhicule comprenant :
- au moins un moyen de transmission de la lumière (2),
- au moins une source de lumière (22) reliée à l'au moins un moyen de transmission de la lumière (2) et orientée vers une extrémité (21) de l'au moins un moyen de transmission de la lumière (2), de telle sorte que l'au moins un moyen de transmission de la lumière (2) guide la lumière émise par l'au moins une source de lumière (22) dans une direction d'émission de la lumière (71),
**caractérisé en ce qu'**il comprend en outre :
- un masque partiellement transparent (5) qui couvre au moins partiellement le moyen de transmission de la lumière (2) de manière à permettre à la lumière de traverser au moins une zone transparente (51) du masque partiellement transparent (5),
- une surface réfléchissante (3) reliée au masque partiellement transparent (5),
- une surface semi-transparente (4) reliée au masque partiellement transparent (5),
- une zone de réflexion (34) formée entre la surface réfléchissante (3) la surface semi-transparente (4) de manière à recevoir la lumière traversant l'au moins une zone transparente (51) du masque partiellement transparent (5),
- une garniture teintée (6) adjacente à la surface semi-transparente (4) qui permet à la lumière de traverser la garniture teintée (6) jusqu'à l'extérieur du panneau intérieur (1) dans une deuxième direction d'émission (73),
dans lequel la garniture teintée (6), la surface réfléchissante (3), la surface semi-transparente (4) et la direction d'émission de la lumière (71) sont sensiblement parallèles les unes aux autres.

2. Dispositif d'éclairage pour un panneau intérieur (1) d'un véhicule selon la revendication 1, **caractérisé en ce que** la deuxième direction d'émission (73) se situe dans un plan sensiblement perpendiculaire à la surface semi-transparente (4).

3. Dispositif d'éclairage pour un panneau intérieur (1) d'un véhicule selon la revendication 1, **caractérisé en ce que** la zone de réflexion (34) est également définie par la zone transparente (51) du masque partiellement transparent (5), la zone de réflexion (34) étant adjacente à l'au moins une zone transparente (51) du masque partiellement transparent (5).

4. Dispositif d'éclairage pour un panneau intérieur (1) d'un véhicule selon la revendication 1, **caractérisé en ce que** la surface réfléchissante (3), la surface semi-transparente (4) et la garniture teintée (6) se chevauchent les unes les autres dans la deuxième direction d'émission de la lumière (73).

5. Dispositif d'éclairage pour un panneau intérieur (1) d'un véhicule selon la revendication 1, **caractérisé en ce que** le panneau intérieur (1) comporte la garniture teintée (6) sous la forme d'un élément externe, la surface semi-transparente (4) étant positionnée entre la surface réfléchissante (3) et la garniture teintée (6).

6. Dispositif d'éclairage pour un panneau intérieur (1) d'un véhicule selon la revendication 1, **caractérisé en ce que** le masque partiellement transparent (5) comporte une face interne blanc mat (53) à côté du moyen de transmission de la lumière (2).

7. Dispositif d'éclairage pour un panneau intérieur (1) d'un véhicule selon la revendication 1, **caractérisé en ce que** le masque partiellement transparent (5) comporte une face externe noire (52) à côté de la zone de réflexion de la lumière (34).

8. Dispositif d'éclairage pour un panneau intérieur (1) d'un véhicule selon la revendication 1, **caractérisé en ce que** le matériau du masque partiellement transparent (5) est l'acrylonitrile-butadiène-styrène (ABS).

9. Dispositif d'éclairage pour un panneau intérieur (1) d'un véhicule selon les revendications 1 à 7, **caractérisé en ce qu'**on laisse passer la lumière à travers le masque partiellement transparent (5) en retirant le noir de la surface externe (52), de manière à définir l'au moins une zone transparente (51) permettant à la lumière de traverser jusqu'à la zone de réflexion (34).

10. Dispositif d'éclairage pour un panneau intérieur (1) d'un véhicule selon la revendication 1, **caractérisé en ce qu'**une cavité (54) formée au moins partiellement par le masque partiellement transparent (5) entoure le moyen de transmission de la lumière (2).

11. Dispositif d'éclairage pour un panneau intérieur (1) d'un véhicule selon la revendication 5, **caractérisé en ce que** la garniture teintée (6) a un fini noir de fumée, et/ou est constituée de polycarbonate avec une coloration noire.

12. Dispositif d'éclairage pour un panneau intérieur (1) d'un véhicule selon la revendication 1, **caractérisé en ce que** la garniture teintée (6) comporte une couche semi-réfléchissante à base de peinture au chrome sur la face orientée vers la surface réfléchissante (3) de telle sorte que la zone de réflexion (34) est formée entre la surface réfléchissante (3) et la garniture teintée (6).

13. Dispositif d'éclairage pour un panneau intérieur (1) d'un véhicule selon la revendication 1, **caractérisé en ce qu'**il comporte une source de lumière (22) en face de chaque extrémité (21) du moyen de transmission de la lumière (2).

14. Dispositif d'éclairage pour un panneau intérieur (1) d'un véhicule selon la revendication 1, **caractérisé en ce que** la surface semi-transparente (4) réfléchit entre 40 % et 60 % des faisceaux lumineux incidents, de telle sorte que certains premiers faisceaux de lumière incidente sur la surface semi-transparente (4) sont réfléchis vers la zone de réflexion (34) et certains deuxièmes faisceaux de lumière incidente sur la surface semi-transparente (4) sont transmis à travers la surface semi-transparente (4) dans la deuxième direction d'émission (73).

15. Panneau intérieur (1) d'un véhicule comprenant un dispositif d'éclairage selon la revendication 1, **caractérisé en ce que** l'au moins un moyen de transmission de la lumière (2) court sensiblement sur la longueur du panneau intérieur (1).
